# EUROPÄISCHE PATENTSCHRIFT

(11) **EP 0 703 137 B1**
(45) Veröffentlichungstag und Bekanntmachung des Hinweises auf die Patenterteilung: **07.01.1998**
(21) Anmeldenummer: 95108972.1
(22) Anmeldetag: 10.06.1995
(51) Int. Cl.: B62D 25/16

(54) **Haltevorrichtung für den seitlichen Abschnitt eines Stossfängers**
Mounting for the side section of a bumper
Fixation pour la partie latérale d'un pare-chocs

(30) Priorität: 23.09.1994 DE 4434123
(43) Veröffentlichungstag der Anmeldung: 27.03.1996
(73) Patentinhaber: AUDI AG, 85045 Ingolstadt (DE)
(72) Erfinder: Erl, Otto, D-85107 Baar-Ebenhausen (DE); Hunger, Heribert, D-85080 Gaimersheim (DE)
(74) Vertreter: Engelhardt, Harald

(56) Entgegenhaltungen:
- EP-A- 0 253 989
- EP-B- 0 548 093
- PATENT ABSTRACTS OF JAPAN vol. 17, no. 64 (M-1364), 8.Februar 1993 & JP 04 271973 A (NISSAN), 28.September 1992,

## Beschreibung

Die Erfindung bezieht sich auf eine Haltevorrichtung für den seitlichen Abschnitt eines Stoßfängers am vorderen Kotflügel eines Personenkraftwagens gemäß dem Oberbegriff des Anspruchs 1.

Eine solche Haltevorrichtung ist beispielsweise aus der EP-B-0 548 093 bekannt. Die dort gezeigte und beschriebene Haltevorrichtung ist einstückig an dem als Blechpreßteil ausgeführten Kotflügel angeformt.

Die Haltevorrichtung ist dazu bestimmt, Führungselemente zu tragen, welche die seitlichen Abschnitte des Stoßfängers aufnehmen.

Neben einer gewichtsgünstigen Ausgestaltung der Haltevorrichtung soll sich diese durch eine besondere Steifigkeit auszeichnen. Darüber hinaus soll die Haltevorrichtung in einfacher Weise die Befestigung der vorstehend genannten Führungselemente ermöglichen.

Diese Erfordernisse werden in kostengünstiger Weise durch die Haltevorrichtung nach Anspruch 1 erfüllt. Die Ausgestaltung der Haltevorrichtung ermöglicht die Herstellung in wenigen Arbeitsschritten. Bei einer hohen Eigensteifigkeit ist eine gute Kraftüberleitung in den sich nach oben anschließenden Kotflügelabschnitt sichergestellt.

Vorteilhafte Ausgestaltungen der Haltevorrichtung sind Gegenstand der Unteransprüche.

Ein Ausführungsbeispiel der Erfindung ist in der Zeichnung dargestellt und wird nachfolgend näher beschrieben. Es zeigen:
- **Fig. 1**: in perspektivischer Darstellung den linken vorderen Kotflügel eines Personenkraftwagens mit einer einstückig an den Kotflügel angeformten Haltevorrichtung für den seitlichen Abschnitt eines Stoßfängers,
- **Fig. 2**: die Außenseite der Haltevorrichtung aus Fig. 1,
- **Fig. 3**: den Schnitt F-F aus Fig. 2,
- **Fig. 4**: den Schnitt K-K aus Fig. 2,
- **Fig. 5**: den Schnitt E-E aus Fig. 2,
- **Fig. 6**: den Schnitt G-G aus Fig. 2 und
- **Fig. 7**: den Schnitt L-L aus Fig. 2.

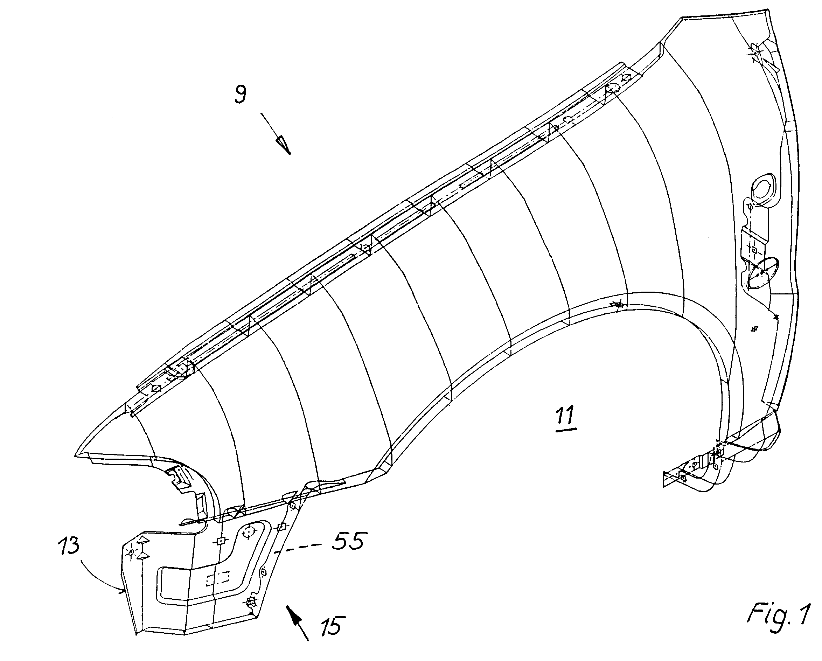

Ein in Fig. 1 perspektivisch dargestellter Kotflügel 9 umfaßt einen Radausschnitt 11, an den sich nach vorne hin eine Haltevorrichtung 13 für den seitlichen Abschnitt eines nicht dargestellten Stoßfängers anschließt. Der Kotflügel 9 ist zusammen mit der Haltevorrichtung 13 einstückig als Blechpreßteil hergestellt.

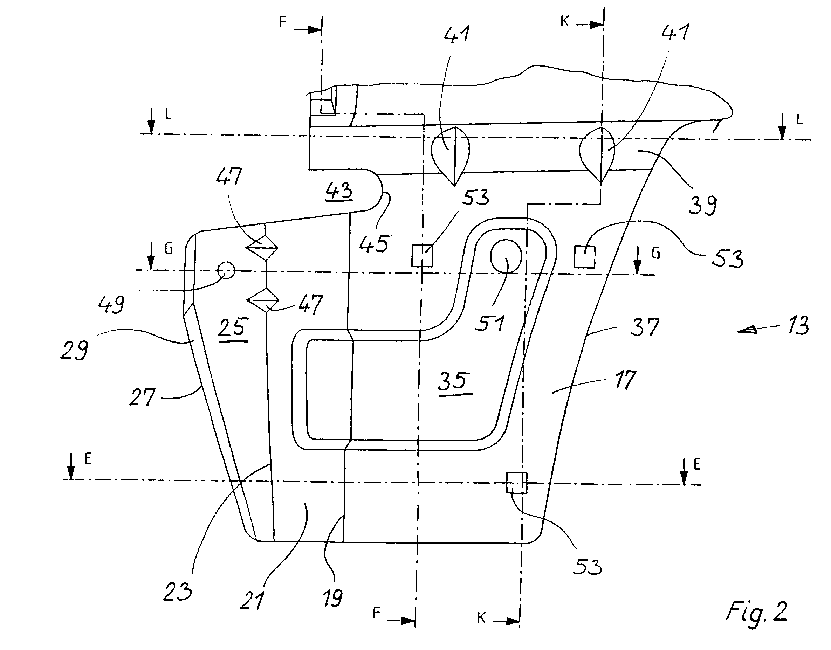

Die Darstellung in Fig. 2 zeigt die Haltevorrichtung 13, gesehen in Blickrichtung des Pfeiles 15 in Fig. 1.

Die Haltevorrichtung 13 weist einen ersten Flächenabschnitt 17 auf, an den sich unter einem Winkel von etwa 32° nach innen geneigt und unter Bildung einer ersten Kante 19 ein zweiter Flächenabschnitt 21 nach vorne hin anschließt. Dieser zweite Flächenabschnitt 21 geht unter Bildung einer zweiten Kante 23, welche wie die erste Kante 19 etwa senkrecht verläuft, in einen dritten Flächenabschnitt 25 über, welcher mit dem zweiten Flächenabschnitt 21 einen Winkel von etwa 51° nach außen geneigt einschließt.

Der vorderste, also der dritte Flächenabschnitt 25, ist von trapezförmiger Gestalt, wobei die zweite Kante 23 und der obere Teil des vorderen Randes 27 des dritten Flächenabschnittes 25 etwa parallel verlaufen. Der untere Teil des vorderen Randes 27 des dritten Flächenabschnitts 25 schließt mit der zweiten Kante 23 einen Winkel von 13° ein. Außerdem ist der vordere Rand 27 des dritten Flächenabschnitts 25 unter Bildung eines Flansches 29 nach außen hin umgebogen.

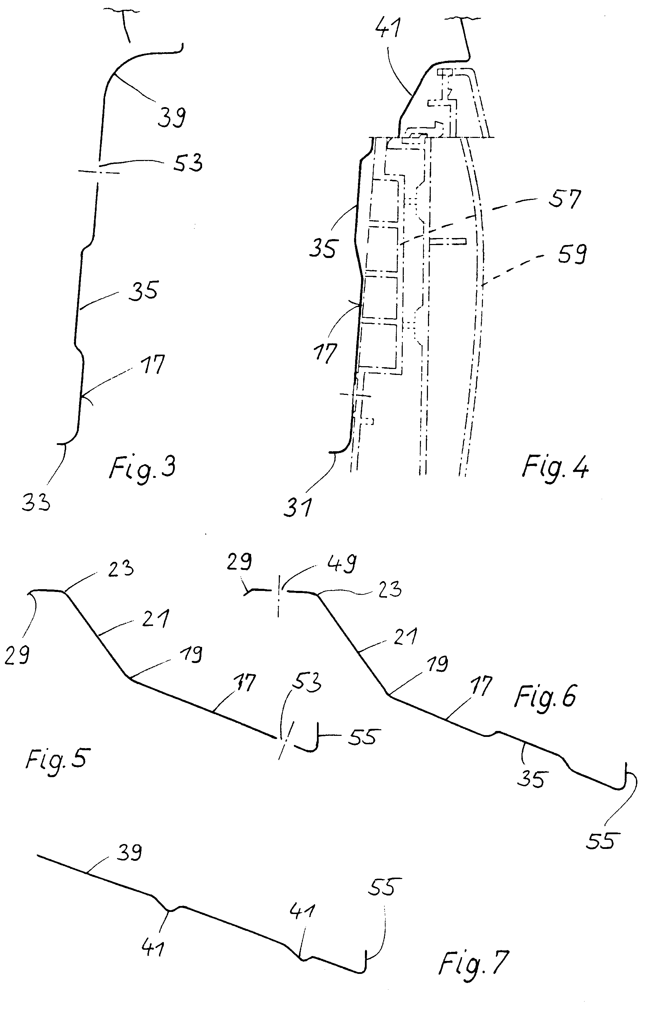

Zur Bildung von Verstärkungsflanschen 31 und 33 sind auch die unteren Randbereiche des ersten Flächenabschnitts 17 und des zweiten Flächenabschnitts 21 nach innen umgebogen, wie dies aus den in den Fig. 3 und 4 dargestellten Schnitten F-F und K-K zu erkennen ist.

Der erste Flächenabschnitt 17 und der zweite Flächenabschnitt 21 sind mit einer gemeinsamen, nach innen gerichteten Einprägung 35 versehen. Wie Fig. 2 deutlich zeigt, setzt sich die Einprägung 35 aus einem waagerechten, etwa rechteckigen Abschnitt und einem sich daran anschließenden, schräg nach oben verlaufenden Abschnitt zusammen. Dabei beginnt die Einprägung 35 etwa in der Mitte des zweiten Flächenabschnitts 21 und geht von dort in den ersten Flächenabschnitt 17 über. Die erste Kante 19 zeichnet sich auch in der Einprägung 35 ab, da diese gleichmäßig tief ausgeführt ist. Die rückwärtige Begrenzung der Einprägung verläuft etwa parallel zu dem hinteren Rand 37 des ersten Flächenabschnitts 17.

Die Haltevorrichtung 13 ist nach oben hin durch einen Absatz begrenzt, an den sich die Haltevorrichtung 13 nach innen versetzt anschließt. Wie die Darstellung in Fig. 3 zeigt, ist der Absatz als konkave Fläche 39 ausgeführt.

Diese Fläche 39 wird durch zwei in horizontalem Abstand angeordnete, etwa vertikale Sicken 41 verstärkt (Fig. 2).

Im vorderen unteren Bereich des Absatzes ist außerdem eine nach vorne offene Aussparung 43 ausgeführt, welche bis in den ersten Flächenabschnitt 17 reicht und dort einen Radius 45 bildet. Die Ränder der Aussparung sind nach innen umgebogen.

Zwei in vertikalem Abstand zueinander angeordnete, etwa horizontale Sicken 47 übergreifen die zweite Kante 23 in deren oberem Bereich und verstärken die Verbindung des zweiten Flächenabschnitts 21 mit dem dritten Flächenabschnitt 25.

In Höhe zwischen den beiden, den zweiten Flächenabschnitt 21 mit dem dritten Flächenabschnitt 25 verbindenden Sicken 47, ist im dritten Flächenabschnitt 25 eine Aufnahmebohrung 49 angeordnet.

Ein weiteres Loch 51 ist im ersten Flächenabschnitt 17 im oberen Bereich der Einprägung 35 ausgeführt.

Zu beiden Seiten des Loches 51, jedoch außerhalb der Einprägung 35 ist in jeweils etwa dem gleichen Abstand je ein Vierkantloch 53 im ersten Flächenabschnitt 17 ausgebildet.

Ein drittes Vierkantloch 53 befindet sich im ersten Flächenabschnitt 17 nahe seinem unteren und hinteren Randbereich.

In der Darstellung gemäß Fig. 1 ist zu ersehen, daß die Haltevorrichtung 13 an der dem Radausschnitt 11 zugewandten Seite mit einem nach innen abgebogenen Befestigungsflansch 55 versehen ist. Dieser Befestigungsflansch 55 mit darin ausgebildeten Löchern dient der Halterung einer nicht dargestellten Radlaufschale.

Die vorstehend beschriebene Haltevorrichtung dient der Befestigung eines Führungselements 57 für den seitlichen Abschnitt 59 eines Stoßfängers. Das Führungselement 57 und der seitliche Abschnitt 59 des Stoßfängers sind in der Schnittdarstellung gemäß Fig. 4 strichpunktiert angedeutet.

## Patentansprüche

1. Haltevorrichtung für den seitlichen Abschnitt eines Stoßfängers am vorderen Kotflügel eines Personenkraftwagens,
wobei die Haltevorrichtung
- einstückig an dem als Blechpreßteil ausgeführten Kotflügel (9) angeformt ist,
- sich an den Radausschnitt (11) des Kotflügels (9) nach vorne hin erstreckt,
- nach oben hin durch einen Absatz, an den sich die Haltevorrichtung (13) nach innen versetzt anschließt, begrenzt ist,
- mehrere Löcher und Einprägungen aufweist,
- an der dem Radausschnitt (11) zugewandten Seite mit einem nach innen abgebogenen Befestigungsflansch (55) mit Löchern versehen ist,
**gekennzeichnet durch folgende Merkmale:**
- . die Haltevorrichtung (13) umfaßt einen ersten Flächenabschnitt (17), an den sich unter einem Winkel von etwa 32° nach innen geneigt und unter Bildung einer ersten Kante (19) ein zweiter Flächenabschnitt (21) nach vorne hin anschließt,
- . der zweite Flächenabschnitt (21) geht unter Bildung einer zweiten Kante (23) in einen dritten Flächenabschnitt (25) über, welcher mit dem zweiten Flächenabschnitt (21) einen Winkel von etwa 51° nach außen geneigt einschließt,
- . der dritte Flächenabschnitt (25) ist von trapezförmiger Gestalt, wobei die zweite Kante (23) und der obere Teil des vorderen Randes (27) des dritten Flächenabschnitts (25) etwa parallel verlaufen,
- . der untere Teil des vorderen Randes (27) des dritten Flächenabschnitts (25) schließt mit der zweiten Kante (23) einen Winkel kleiner 20° ein,
- . der vordere Rand (27) des dritten Flächenabschnitts (25) ist unter Bildung eines Flansches (29) nach außen umgebogen,
- . die unteren Randbereiche des ersten und des zweiten Flächenabschnitts (17 bzw. 21) sind unter Bildung von Verstärkungsflanschen (31 bzw. 33) nach innen umgebogen,
- . der erste und der zweite Flächenabschnitt (17 bzw. 21) sind mit einer gemeinsamen, nach innen gerichteten Einprägung (35) versehen, welche sich aus einem waagerechten, etwa rechteckigen Abschnitt und einem sich daran anschließenden, schräg nach oben verlaufenden Abschnitt zusammensetzt,
- . die Einprägung (35) beginnt etwa in der Mitte des zweiten Flächenabschnitts (21) und geht von dort unter Fortführung der ersten Kante (19) in den ersten Flächenabschnitt (17) über,
- . die rückwärtige Begrenzung der Einprägung (35) verläuft etwa parallel zum hinteren Rand (37) des ersten Flächenabschnitts (17),
- .der die Haltevorrichtung (13) nach oben hin begrenzende Absatz ist als konkave Fläche (39) ausgeführt,
- .zwei in horizontalem Abstand angeordnete, etwa vertikale Sicken (41) verstärken die konkave Fläche (39),
- .im vorderen unteren Bereich des Absatzes ist eine nach vorne offene Aussparung (43) in der Haltevorrichtung (13) ausgeführt, welche bis in den ersten Flächenabschnitt (17) reicht und dort einen Radius (45) bildet,
- .zwei in vertikalem Abstand zueinander angeordnete, etwa horizontale Sicken (47) übergreifen die zweite Kante (23) und verstärken die Verbindung des zweiten Flächenabschnitts (21) mit dem dritten Flächenabschnitt (25),
- .in Höhe zwischen den beiden, den zweiten mit dem dritten Flächenabschnitt (21 bzw. 25) verbindenden Sicken (47) ist im dritten Flächenabschnitt (25) eine Aufnahmebohrung (49) angeordnet.

2. Haltevorrichtung nach Anspruch 1, **dadurch gekennzeichnet**, daß die Randbereiche der nach vorne offenen Aussparung (43) nach innen umgebogen sind.

3. Haltevorrichtung nach einem der Ansprüche 1 oder 2, **dadurch gekennzeichnet**, daß im ersten Flächenabschnitt (17) im oberen Bereich der Einprägung (35) ein Loch (51) ausgebildet ist.

4. Haltevorrichtung nach Anspruch 3, **dadurch gekennzeichnet**, daß zu beiden Seiten des Loches (51), jedoch außerhalb der Einprägung (35), in jeweils etwa dem gleichen Abstand je ein Vierkantloch (53) im ersten Flächenabschnitt (17) angeordnet ist.

5. Haltevorrichtung nach einem der Ansprüche 1 bis 4, **dadurch gekennzeichnet**, daß im ersten Flächenabschnitt (17) nahe seinem unteren und hinteren Randbereich ein Vierkantloch (53) ausgebildet ist.

## Claims

1. Holding device for the side section of a bumper on the front wing of a passenger car,
in which the holding device
- is formed in one piece onto the wing (9) which is a moulded sheet-metal part;
- extends in a forward direction along the wheel cutout (11) of the wing (9);
- is upwardly defined by a step which is joined inwardly transposed by the holding device (13);
- comprises a plurality of holes and impressions;
- is at the side oriented towards the wheel cutout (11) provided with an inwardly bent mounting flange (55) with holes,
**characterised by the following features:**
- the holding device (13) encases a first surface area (17) which is in the forward direction joined by a second surface section (21), which is inwardly slanted at an angle of approximately 32° whilst forming a first edge (19);
- the second surface section (21) merges, whilst forming a second edge (23), into a third surface section (25) which, together with the second surface section (21), includes an angle of approximately 51° at an outward slant;
- the third surface section (25) is of trapezoidal shape, and the first edge (23) and the upper part of the front edge (27) of the third surface section (25) extend approximately in parallel;
- the lower portion of the front edge (27) of the third surface section (25) includes, together with the second edge (23), an angle of less than 20°;
- the front edge (27) of the third surface section (25) is outwardly bent whilst forming a flange (29);
- the lower edge areas of the first and the second surface section (17 or 21) are bent inwards whilst forming reinforcing flanges (31 or 33);
- the first and the second surface section (17 or 21) are provided with a common, inwardly oriented impression (35) which is composed of a horizontal, approximately rectangular section and a thereto adjacent section which extends upwards at a slant;
- the impression (35) starts approximately in the middle of the second surface section (21) and merges from there into the first surface section (17) whilst continuing the first edge (19);
- the rear definition of the impression (35) extends approximately parallel to the rear edge (37) of the first surface section (17);
- the step which upwardly defines the holding device (13) is in the form of a concave surface (39);
- two approximately vertical crimps (41) arranged at a horizontal distance reinforce the concave surface (39);
- in the front lower area of the step is developed a cutout (43), which is open in the forward direction, in the holding device (13) which extends up into the first surface area (17) where it forms a radius (45);
- two approximately horizontal crimps (47), arranged at a vertical distance from each other, reach over the second edge (23) and reinforce the connection of the second surface section (21) with the third surface section (25);
- at the height between the two crimps (47) which connect the second and the third surface section (21 or 25), a receiving bore (49) is placed in the third surface section (25).

2. Holding device according to Claim 1, **characterised in that** the edge areas of the forwardly open cutouts (43) are bent inwards.

3. Holding device according to one of Claims 1 or 2, **characterised in that** a hole (51) is established in the first surface section (17) in the upper area of the impression (35).

4. Holding device according to Claim 3, **characterised in that** on both sides of the hole (51), though outside the impression (35), is arranged at approximately the same distance a respective rectangular hole (53) in the first surface section (17).

5. Holding device according to one of Claims 1 to 4, **characterised in that** a rectangular hole (53) is arranged in the first surface section (17) near its lower and rear edge area.

## Revendications

1. Dispositif de fixation de la partie latérale d'un pare-chocs sur l'aile avant d'une voiture particulière, le dispositif de fixation
- étant formé en une seule pièce sur l'aile (9) réalisée sous forme d'une pièce emboutie en tôle,
- s'étendant vers l'avant au bord de l'ouverture de roue (11) de l'aile (9),
- étant limité vers le haut par un décrochement, auquel le dispositif de fixation (13) se raccorde en étant décalé vers l'intérieur,
- comportant plusieurs trous et empreintes,
- étant pourvu, sur le côté tourné vers l'ouverture de roue (11), d'un rebord de fixation (55) replié vers l'intérieur et comportant des trous,
caractérisé par les caractéristiques suivantes:
- le dispositif de fixation (13) comprend une première portion de surface (17), à laquelle une deuxième portion de surface (21) se raccorde vers l'avant en étant inclinée vers l'intérieur sous un angle d'environ 32° et en formant une première arête (19),
- la deuxième portion de surface (21) rejoint, en formant une deuxième arête (23), une troisième portion de surface (25), qui forme avec la deuxième portion de surface (21), en étant inclinée vers l'extérieur, un angle d'environ 51°,
- la troisième portion de surface (25) est d'une configuration trapézoïdale, la deuxième arête (23) et la partie supérieure du bord avant (27) de la troisième portion de surface (25) étant alors sensiblement parallèles,
- la partie inférieure du bord avant (27) de la troisième portion de surface (25) forme avec la deuxième arête (23) un angle inférieur à 20°,
- le bord avant (27) de la troisième portion de surface (25) est replié vers l'extérieur en formant un rebord (29),
- les régions de bord inférieures de la première et de la deuxième portion de surface (17 et 21) sont repliées vers l'intérieur en formant des rebords de renforcement (31 et 33),
- la première et la deuxième portion de surface (17 et 21) sont pourvues d'une empreinte commune (35) dirigée vers l'intérieur, qui se compose d'une partie horizontale, sensiblement rectangulaire, et d'une partie s'étendant obliquement vers le haut, qui se raccorde à cette dernière,
- l'empreinte (35) commence à peu près au centre de la deuxième portion de surface (21) et, de à, se prolonge dans la première portion de surface (17), tout en maintenant la continuité de la première arête (19),
- la ligne de délimitation de l'empreinte (35) vers l'arrière s'étend à peu près parallèlement au bord arrière (37) de la première portion de surface (17),
- le décrochement qui délimite vers le haut le dispositif de fixation (13), est réalisé sous forme d'une surface concave (39),
- deux moulures sensiblement verticales (41), disposées à distance l'une de l'autre en direction horizontale, renforcent la surface concave (39),
- dans la région inférieure avant du décrochement, il est réalisé, dans le dispositif de fixation (13), un évidement (43) ouvert vers l'avant, qui parvient jusque dans la première portion de surface (17) et y forme un arrondi (45),
- deux moulures sensiblement horizontales (47), disposées à distance l'une de l'autre en direction verticale, sont formées à cheval sur la deuxième arête (23) et renforcent la jonction de la deuxième portion de surface (21) avec le troisième portion de surface (25),
- une forure de réception (49) est disposée dans la troisième portion de surface (25), à hauteur de la partie définie entre les deux moulures (47) joignant la deuxième portion de surface (21) à la troisième portion de surface (25).

2. Dispositif de fixation selon la revendication 1, caractérisé en ce que les régions de bord de l'évidement (43) ouvert vers l'avant sont repliées vers l'intérieur.

3. Dispositif de fixation selon la revendication 1 ou 2, caractérisé en ce qu'un trou (51) est formé dans la première portion de surface (17), dans la région supérieure de l'empreinte (35).

4. Dispositif de fixation selon la revendication 3, caractérisé en ce que, dans la première portion de surface (17), est disposé suivant sensiblement le même écartement, des deux côtés du trou (51), mais à l'extérieur de l'empreinte (35), un trou carré respectif (53).

5. Dispositif de fixation selon l'une quelconque des revendications 1 à 4, caractérisé en ce qu'un trou carré (53) est ménagé dans la première portion de surface (17), à proximité de sa région de bord inférieure et arrière.
